# EUROPEAN PATENT SPECIFICATION

(11) **EP 1 290 104 B1**
(45) Date of publication and mention of the grant of the patent: **03.08.2005**
(21) Application number: 01939397.4
(22) Date of filing: 23.05.2001
(51) Int. Cl.: C09J 161/14, C09J 161/06

(54) **ORGANIC-FUNCTIONAL SILANE ADDUCT AND COOLANT RESISTANT AND THERMALLY STABLE PRIMER COMPOSITION**
ORGANO-FUNKTIONELLES SILANADDUKT UND KÜHLMITTELBESTÄNDIGE UND THERMOSTABILE GRUNDIERUNGSZUSAMMENSETZUNG
PRODUIT D'ADDITION ORGANIQUE FONCTIONNEL DE SILANE ET COMPOSITION D'APPRET RESISTANTE AUX REFRIGERANTS ET THERMIQUEMENT STABLE

(30) Priority: 23.05.2000 US 576461
(43) Date of publication of application: 12.03.2003
(73) Proprietor: LORD CORPORATION, Cary, NC 27512-8012 (US)
(72) Inventor: WANG, Zhiqiang, M., Erie, PA 16510 (US)
(74) Representative: Weber, Thomas, Dr.Dipl.-Chem.
(86) International application number: PCT/US2001/016841
(87) International publication number: WO 2001/090270

(56) References cited:
- EP-A- 0 505 115
- US-A- 4 670 057
- PATENT ABSTRACTS OF JAPAN vol. 016, no. 106 (C-0919), 16 March 1992 (1992-03-16) & JP 03 281618 A (SEKISUI CHEM CO LTD), 12 December 1991 (1991-12-12)

## Description

### FIELD OF THE INVENTION

The invention relates to primer compositions that are useful for bonding elastomers to various substrates, such as metals, ceramics, fiberglass, and organic polymers. The primer compositions of the invention contain organic-functional silane compounds.

### BACKGROUND OF THE INVENTION

Since the late 1980's, elastomer coated stainless steel coils have been used to design multi-layered steel engine head gaskets. In particular, these stainless steel coils have been coated with elastomers such as nitrile butadiene rubber or fluoroelastomer. Application of a thin primer between the rubber coating and stainless steel surface is a common industrial practice since an elastomer coating alone does not provide the desired wet adhesion on stainless steels. Generally speaking, the resistance of the primer to the surrounding media, such as engine oil, coolant, fuel and heat, in a great degree, decides the performance and durability of the gasket.

Numerous silane adhesive compositions have previously been developed for the purpose of bonding elastomeric materials to various substrates. For example, U.S.-A-5,532,314 and 5,907,015 relate to silane adhesive compositions which have various organic-functional silanes as a bonding agent. Primers based on silanes generally show good dry adhesion in bonding organic coatings to steel or other metal substrates. However, some of the silane based primers have been found to not have the desired durability in hot coolant immersion.

Phenolic resoles toughed by elastomers or flexible organic resins are widely used as primers or structural adhesives to bond metals. The adhesion between the phenolic resole based primers and the metal surface can be enhanced by addition of organic silanes. In many applications, satisfactory adhesion is achieved using a phenolic/silane based primer. However, the adhesion is gradually lost under aggressive wet environments such as boiling water exposure or hot coolant immersion.

Thus, there is a need in the art for a primer or adhesive composition for bonding elastomers to substrates which exhibits good adhesion in both dry and wet applications. There further is a need in the art for a primer or adhesive composition which shows robust dry and wet adhesion to metallic or other surfaces under harsh environments such as hot oil, hot coolant and thermal aging. Additionally, there is a need in the art for a coolant resistant primer or adhesive for bonding elastomers to substrates which also is thermally stable. Moreover, there is a need in the art for a primer composition which can bond elastomers to substrates without surface treatment of the substrate. This invention provides such a primer and a method for bonding an elastomer to a substrate with the primer of the invention.

### SUMMARY OF THE INVENTION

The present invention provides primer compositions which bond elastomers to substrates such as metals, ceramics, fiberglass, or organic polymers. In particular, the invention is directed to a primer composition which includes an organic-functional silane adduct.

In particular, the present invention relates to an organic-functional silane adduct which is the reaction product of
(1) an isocyanatosilane and a non-isocyanate organofunctional silane which is reactive with isocyanate groups, or
(2) a non-isocyanate organofunctional silane and polyisocyanate,
wherein the adduct is characterized by the absence of free isocyanate groups.

The present invention further relates to a primer composition comprising said silane adduct.

The invention further is directed to a method of bonding an elastomer to a metal comprising coating the metal with the above primer composition comprising a phenolic resin, a phenoxy resin, and an organic-functional silane adduct, drying the primer composition coating, applying an elastomer coating to the primer composition coating, and curing the elastomer coating with heat.

Preferred embodiments of the invention become apparent from the dependent claims.

It has been found that the primer compositions of the present invention containing phenolic resins are unstable in combination with polyisocyanates or isocyanatosilanes. However it would be desirable to provide adhesive primers containing organic-functional silane adducts that provide good dry as well as wet adhesion, particularly of elastomers to substrates such as metals, when these adducts are used in compositions as primers, adhesives or as a protective coating on metals.

### DETAILED DESCRIPTION OF THE INVENTION

Representative non-isocyanate-organofunctional silanes which are suitable for making an adduct with an isocyanatosilane or polyisocyanate include without limitation those silanes that contain a group that contains an abstractible hydrogen, such as amino, mercapto, and hydroxy groups.

Representative hydroxyl group-containing silanes have the general structure: 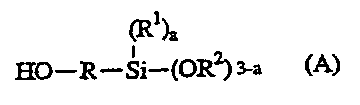 wherein R in all instances herein is a divalent aliphatic, cycloaliphatic or aromatic saturated or unsaturated radical having from 1 to 20 carbon atoms, and is preferably an alkylene radical having from 1 to 9, most preferably 2 to 4, carbon atoms; R¹ is a monovalent aliphatic, cycloaliphatic or aromatic radical having from 1 to 20 carbon atoms, and is preferably selected from the group consisting of alkyl radicals having from 1 to 4 carbon atoms, cycloalkyl radicals having from 4 to 7 ring carbon atoms, and aryl radicals having 6, 10, or 14 nuclear carbon atoms, and including such aryl radicals containing one or more substituent alkyl groups having from 1 to 4 carbon atoms; R² is a monovalent aliphatic, cycloaliphatic or aromatic organic radical containing from 1 to 8 carbon atoms, and is preferably selected from the group consisting of alkyl radicals having from 1 to 4 carbon atoms, R³-O-R⁴, 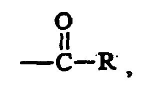 and where R³ is an alkylene group having from 1 to 4 carbon atoms (methyl ethyl, propyl, butyl) and R⁴ is an alkyl group having from 1 to 4 carbon atoms; and a is zero or 1, preferably zero;

Aminofunctional silanes include those having the structure (B) 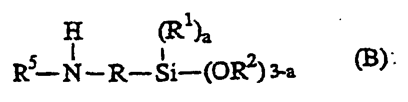 wherein R, R¹, R² and a are as previously defined for (A); and R⁵ is selected from the group consisting of hydrogen, monovalent aliphatic radicals having from 1 to 8 carbon atoms, monovalent cycloaliphatic radicals having from 4 to 7 ring carbon atoms, phenyl, alkaryl radicals having 6 nuclear carbon atoms and containing one or more substituent alkyl groups having from 1 to 4 carbon atoms, and -R⁶-NH-R⁷, wherein R⁶ is selected from the group consisting of divalent aliphatic, cycloaliphatic and aromatic radicals having from 1 to 20 carbons, there being preferably at least two carbon atoms separating any pair of nitrogen atoms, with R⁶ being preferably an alkylene group of 2 to 9 carbon atoms; and R⁷ being the same as R⁵ and preferably is hydrogen.

Mercaptofunctional silanes include those having the structure (C) 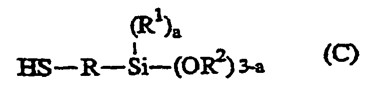 wherein R, R¹, R² and a are as previously defined;

Other preferred organosilane compounds have a single organic chain having from 1 to 20 carbon atoms, said chain having at least one extractable hydrogen atom, said extractable hydrogen atom preferably being attached to a functional group separated from the silicon atom by a chain of at least 3 interconnected carbon atoms.

Representative isocyanate-reactive organosilanes are hydroxypropyltrimethoxysilane, hydroxypropyltriethoxysilane, hydroxybutyltrimethoxysilane, g-aminopropyltrimethoxysilane g-aminopropyltriethoxysilane, methylaminopropyltrimethoxysilane, g-aminopropyltripropoxysilane, g-aminoisobutyltriethoxysilane, g-aminopropylmethyldiethoxysilane, g-aminopropylethyldiethoxysilane, g-aminopropylphenyldiethoxysilane, d-aminobutyltriethoxysilane, d-aminobutylmethyldiethoxysilane, d-aminobutylethyldiethoxysilane, g-aminoisobutylmethyldiethoxysilane, N-methyl-g-aminopropyltriethoxysilane, N-phenyl-g-aminoisobutylmethyldieth oxysilane, N-ethyl-d-aminobutyltriethoxysilane, N-g-aminopropyl-g-aminopropyltriethoxysilane, N-.beta.-aminoethyl-g-aminoisobutyltriethoxysilane, N-g-aminopropyl-d-aminobutyltriethoxysilane, N-aminohexyl-g-aminoisobutylmethyldiethoxysilane, methylaminopropyltriethoxysilane, g-aminopropylmethoxydiethoxysilane, and the like.

Adducts can be formed by reaction of the above organofunctional silane with polyisocyanates. Polyisocyanates can be any compound bearing at least two reactive isocyanate groups. Included within the purview of suitable polyisocyanates are aliphatic, cycloaliphatic, and aromatic polyisocyanates, as these term are generally interpreted in the art. Thus it will be appreciated that any of the known polyisocyanates such as alkyl and alkylene polyisocyanates, cycloalkyl and cycloalkylene polyisocyanates, aryl and arylene polyisocyanates, and combinations such as alkylene, cycloalkylene and alkylene arylene polyisocyanates, can be employed in the practice of the present invention. The adduct contains no residual free isocyanate groups, which would cause instability in the adduct in the presence of a phenolic resin and/or phenoxy resin.

"Free of isocyanate groups in the adduct" means that the level of free residual isocyanate groups in the adduct is negligible, or of such a low amount as to not cause an instable mixture with phenolic resin and/or phenoxy compound in the primer.

Suitable polyisocyanates reacted with the organosilanes to make the adduct include without limitation tolylene-2,4-diisocyanate, 2,2,4-trimethylhexamethylene-1,6-diisocyanate; hexamethylene-1,6-diisocyanate, diphenylmethane-4,4'-diisocyanate, triphenylmethane-4,4',4-triisocyanate, 3-isocyanatomethyl-3,5,5-trimethylcyclohexylisocyanate, polymethylene polyphenylisocyanate, m-phenylenediisocyanate, p-phenylenediisocyanate, 2,6-tolylene diisocyanate, 1,5-naphthalenediisocyanate, naphthalene-1,4-diisocyanate, diphenylene-4,4'-diisocyanate, 3,3'-bitolylene-4,4'-diisocyanate, ethylene diisocyanate; propylene-1,2-diisocyanate, butylene-2,3-diisocyanate, ethylidenediisocyanate, butylidenediisocyanate, xylene-1,4-diisocyanate, xylylene-1,3-diisocyanate, methylcyclohexyldiisocyanate, cyclopentylene-1,3-diisocyanate, cyclohexylene-1,4-diisocyanate, 4,4-methylene-bis(cyclohexylisocyanate), p-phenylene-2,2'-bis(ethylisocyanate), 4,4'-diphenylene ether-2,2'-bis(ethylisocyanate), tris(2,2',2-ethylisocyanate benzene), 5-chloro-phenylene-1,3-bis(propyl-3-isocyanate), 5-methoxy-phenylene-1,3-bis(propyl-3-isocyanate), 5-cyanophenylene-1,3-bis(propyl-3-isocyanate), 4-methyl-phenylene-1,3-bis(propyl-3-isocyanate), and the like. Preferred polyisocyanates are polyalkylene (polyaryleneisocyanates) having the formula (C): 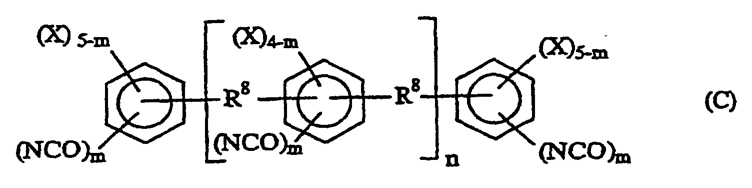 wherein R⁸ is a divalent organic radical, preferably a divalent aliphatic radical having from 1 to 8 carbon atoms, especially such radicals obtained by removing the carbonyl oxygen from an aldehyde or ketone, and preferably is methylene;
m is 1 or 2, and is preferably 1;
n is a digit having an average value in the range from zero to 15, preferably 0.1 to 4, and most preferably 0.3 to 1.8; and
X is independently selected from the group consisting of hydrogen, halogen, alkyl radicals having from 1 to 8 carbon atoms, and alkoxy radicals having from 1 to 8 carbon atoms, and preferably is hydrogen.

Isocyanatosilane adducts can be readily prepared by effecting reaction between a multifunctional organosilane and a polyisocyanate by adding the organosilane, preferably as a dilute solution, to the polyisocyanate, also preferably diluted, at a temperature in the range from 10° to 100° C., while agitating the mixture by a mechanical stirrer or similar device. While not essential, a suitable catalyst, such as dibutyltin dilaurate, can be employed. The reaction is essentially instantaneous, particularly when catalysts are employed, and is accompanied by a mold exotherm. It is essential that the amount of polyisocyanate present during the reaction be such as to ensure obtaining an adduct having at least one free isocyanate group. Thus it will be appreciated that the minimum amount, in molar equivalents of NCO, of polyisocyanate required to form the adducts of the invention is one molar equivalent of NCO in excess of the amount, in molar equivalents of NCO, required to react with all the active hydrogen of the silane reactant

Preferably, the silane adducts are prepared by reacting at least one primary amino-functional silane with at least one isocyanato-functional silane or polyisocyanate. IN the reaction product of a non-isocyanatesilane and a polyisocyanate, the non-isocyanatesilane must be present in a molar excess, in relation to the equivalents of isocyanate groups present in the polyisocyanate. Detection of residual isocyanate can be readily determined so as to provide sufficient removal of the isocyanate. Alternatively, but not as preferred, an equimolar amount of non-isocyanatesilane could be used, leaving residual isocyanate groups remaining in the adduct which can be further converted routinely by hydrolysis, rendering the adduct stable for combination with a phenolic and/or phenoxy resin.

It has unexpectedly been found that the reaction products of these types of organic-functional silanes provide good adhesion in both wet and dry applications and if the adduct is made using a molar excess of organofunctional silane, a stable mixture with phenolic resin can be obtained. The reaction of an amino-functional silane and an isocyanato-functional silane of one embodiment results in a hexaalkoxylsilane bonded through a urethane or substituted urea linkage. The resulting adduct provides excellent properties when used as a primer, even in aggressive wet environments.

Silanes previously have been used as adhesion promoters for organic coatings. However, it is known that the siloxane bond formed after silane crosslinking can be hydrolyzed with water. Consequently, most of the silane based primers have good dry adhesion but poor wet adhesion. The primer composition of the present invention has overcome this deficiency of the art by utilizing an organic-functional silane adduct, preferably synthesized by the reaction of an amino-functional silane with an isocyanato-functional silane. While not wishing to be bound by any theory, it is believed that this adduct provides superior wet adhesion for a number of reasons. First, this adduct has a higher molecular weight than that of the individual silane and that of silanes known in the art. The higher molecular weight of the silane adduct is believed to reduce the evaporation rate during the cure of the coating in hot air. Thus, this silane adduct is more effectively involved in the metal and coating adhesion. Secondly, this silane adduct becomes a more effective crosslinker by doubling the methoxy or ethoxy groups of the individual silanes through the reaction. Thus, this silane adduct should have higher crosslinking density at the primer to substrate interface under water attack.

Amino-functional silanes useful in the present invention may be any amino-functional silane capable of reacting with an isocyanato-functional silane. In one embodiment, the amino-functional silane is an aminoalkyl silane. In another embodiment, the amino-functional silane is a secondary amino-functional silane. In a preferred embodiment, the amino-functional silane is a phenyl-substituted amino-functional silane. Examples of amino-functional silanes which are useful in the present invention include those available under the tradename Silquest™. Examples of useful Silquest™ amino-functional silanes include Silquest™ Y-9669, N-phenyl-*gamma*-aminopropyltrimethoxysilane, Silquest™ A1170, *bis*-(*gamma*-trimethoxysilylpropyl)amine, Silquest™ A1100, *gamma*-aminopropyltriethoxysilane, Silquest™ A1110, *gamma*-aminopropyltrimethoxysilane, and Silquest™ A1120, N-(*beta*-aminoethyl)-*gamma*-aminopropyltrimethoxysilane. The preferred amino-functional silane for use in the present invention is Silquest™ Y-9669.

The isocyanato-functional silane used in the primer composition of the present invention may be any isocyanato-functional silane which can react with an amino-functional silane. Generally, the isocyanato-functional silane has at least one isocyanate group. In a preferred embodiment, the isocyanato-functional silane is an isocyanatoalkylalkoxysilane, wherein the alkyl and alkoxy groups have 1-5 carbon atoms. An example of an isocyanato-functional silane useful in the present invention is Silquest™ A-1310, which is *gamma*-isocyanatopropyltriethoxysilane.

The relative proportion of organofunctional silane to isocyanato-functional silane present in the composition of the invention may vary somewhat depending on the use intended. Generally, the relative proportion of amino-functional silane to isocyanato-functional silane will be 1:0.2 to 1:1. In a preferred embodiment, the relative proportion of amino-functional silane to isocyanato-functional silane will be 1:0.5 to 1:0.8.

The organic-functional silane adduct generally will be present in the primer composition in an amount of 0.2% to 15% based on the dry weight of the total composition. Preferably, the silane adduct will be present in the primer composition in an amount of 0.5% to 5% based on the dry weight of the total composition. In a preferred embodiment, an excess of amino-functional silane will be present in the primer composition. This excess amino-functional silane is provided to react with any remaining isocyanate from the previous reaction of amino-functional silane with isocyanato-functional silane.

The phenoxy resin used in the composition of the present invention is provided as a toughener. Any phenoxy resin may be used; however, in a preferred embodiment, the phenoxy resin is crosslinked by a phenolic resin. It has been found that the reaction product of phenoxy resin crosslinked by phenolic resin has satisfactory thermal stability and hydrophobicity, enhancing the wet adhesion of the primer to the substrate. When phenoxy resin and a phenolic resin are provided in the primer composition, heat provided during the curing process in the bonding of an elastomeric material to a substrate with the primer compositions enables the crosslinking of the phenoxy resin by the phenolic resin.

The phenoxy resin may be any commercially available phenoxy resin such as Paphen phenoxy resin. The phenoxy resin generally will be present in the primer composition in an amount of 10% to 80% based on the dry weight of the total composition. In a preferred embodiment, the phenoxy resin is present in an amount of 20% to 50% based on the dry weight of the total composition.

The phenolic resin useful in the primer composition may be any resole or thermoset phenolic resin. In a preferred embodiment, the phenolic resin generally will be an alkylated thermosetting phenolic resin. In the most preferred embodiment, the phenolic resin is a butylated thermosetting phenolic resin such as GPRI 7590. The phenolic resin generally will be present in the primer composition in an amount of 5% to 70% based on the dry weight of the total composition. In a preferred embodiment, the phenolic resin is present in an amount of 15% to 45% based on the dry weight of the total composition.

The primer composition of the present invention also preferably contains a filler component, such as carbon black, metal oxides, organic fillers or talc. In a preferred embodiment, the filler component is talc. Any talc may be used, but the preferred talc is a surface treated talc, such as Mistron ZSC, which is surface treated with zinc stearate to obtain a hydrophobic surface. Due to the flake shape, talc is believed to have much better barrier properties than non-flake type fillers. Moreover, the surface treated talc has been found to have much higher hydrophobicity than untreated talc products. It is further believed that the high hydrophobicity of the treated talc reduces the water absorption rate which, in return, slows down the hydrolysis process of the crosslinked silanes of the present invention. The talc generally will be used in an amount of 5% to 60% by dry weight of the total composition. In a preferred embodiment, the talc will be used in an amount of 20% to 40% by dry weight of the total composition.

The primer compositions of the present invention can optionally contain well-known additives including plasticizers, pigments, reinforcing agents, and the like, in amounts employed by those skilled in the primer or adhesive arts to obtain the desired color and consistency. Typical optional additives include titanium dioxide, carbon black, and zinc oxide.

The dry components of the primer composition of the present invention generally will be mixed with one or more compatible solvents. These solvents may be organic solvents such as ketones, acetates, hydrocarbons, or alkyl alcohols. In one embodiment, the solvent component is a mixture of organic solvents. Preferred solvents include toluene, ethyl acetate or isopropyl alcohol. The solvent component generally will be used in an amount of 20% to 90% by wet weight of the total composition. In a preferred embodiment, the solvent will be used in an amount of 60% to 80% by wet weight of the total composition.

The primer compositions of the present invention are typically prepared by mixing the organic-functional silane with the phenoxy resin, the phenolic resin and any remaining ingredients. In a preferred embodiment, the composition is prepared by first reacting an amino-functional silane with an isocyanato-functional silane at room temperature by slowly adding the isocyanato-functional silane into the amino-functional silane under agitation. The remaining ingredients are then added to the silane adduct with mixing and agitation of the combination of ingredients in any conventional manner.

The materials which may be bonded to a substrate such as metal, ceramic, fiberglass, or organic polymers, with the primer compositions of the present invention, are preferably polymeric materials, including any elastomeric material selected from any of the natural rubbers and olefinic synthetic rubbers including polychloroprene, polybutadiene, neoprene, styrene-butadiene rubber, butyl rubber, brominated butyl rubber, nitrile butadiene rubber, fluoroclastomers, and the like. In a preferred embodiment, the primer composition is used for bonding nitrile butadiene rubber or a fluoroelastomer.

The substrate to which the elastomer is bonded with the primer composition of the invention can be any solid surface such as metal, ceramic, fiberglass, organic polymer or fabric capable of receiving the primer. Preferably, the primer composition will be used with a metal surface selected from any of the common structural metals such as iron, steel, including stainless steel, lead, aluminum, copper, brass, bronze, titanium, Monel metal, nickel, zinc, ghosphatized steel, and the like.

The primer composition of the present invention may be used for a number of different applications, including as a primer, an adhesive, or a protective coating. For example, the primer compositions of the invention may be used as a surface protection coating for stainless steel and other metallic surfaces. Due to the good flexibility and coolant resistance of the primer composition, the primer composition may also be used as a general flexible, ethylene glycol resistant primer for rubber to metal bonding. In a most preferred embodiment, the primer composition of the invention is used for bonding nitrile butadiene rubber and/or a fluoroelastomer to stainless steel and the nitrile butadiene rubber and/or fluoroelastomer coated stainless steel is used to make multi-layer steel engine head gaskets. Such gaskets require aggressive environmental resistance to elements such as hot oil, hot coolant and heat aging. The primer composition of the invention provides all the performance needed for such applications.

The primer compositions are preferably used to bond an elastomeric material such as nitrile butadiene rubber or a fluoroelastomer to a metal surface. The primer composition may be applied to the metal surface by roll coating, spraying, dipping, brushing, wiping, screen printing, or the like, after which the adhesive is permitted to dry. The drying step may be by air drying or other method known to those of skill in the art. Generally, the air drying step will be conducted at temperatures less than 148.9 °C (300°F).

After the primer has been subjected to drying, an elastomer is applied to the primer surface by any of the methods known in the art. The elastomer is allowed to dry, also generally by air drying at temperatures less than 148.9 °C (300°F). The elastomer/substrate composite which has been adhered with the primer composition may be then cured with heat. The time and temperature of the cure will depend upon the application for which the elastomer to substrate composite is intended. For example, for some applications, a fast cure is desirable. In those cases, a high temperature between 204.4 °C (400 °F) and 287.8 °C (550 °F) is used for less than about two minutes. For applications where a longer cure is acceptable, the temperature generally will be 148.9 °C (300°F) to 176.7 °C (350°F) for two to 10 minutes. After the process is complete, the bond is fully vulcanized and ready for use in a final application.

The following examples are given to illustrate the invention and should not be consrtued to limit the scope of the invention.

### EXAMPLE 1

A primer composition according to the present invention was made by first preparing a silane adduct by reacting Silquest A1310, an isocyanato-functional silane, with Silquest Y9669, an amino-functional silane. Silquest A1310 is *gamma* isocyanatopropyltriethyoxysilane and Silquest Y9669 is N-phenyl-*gamma*-aminopropyltrimethoxysilane. The reaction of the isocyanato-functional silane with the amino-functional silane was conducted at room temperature by slowly adding A1310 into Y9669 under agitation. No by-product was formed in this reaction.

After the silane adduct was formed, the remaining ingredients were combined with the silane adduct. The composition was as follows:

| **Materials** | **Dry Weight (g)** | **Wet Weight (in g based on a total of 100g)** |
|---|---|---|
| Carbon black (N762) | 0.41 | 0.41 |
| talc (Mistron ZSC) | 15.69 | 15.69 |
| ZnO | 1.03 | 1.03 |
| Phenoxy resin | 9.71 | 9.71 |
| Phenolic resin (GPRI 7590) | 10.94 | 18.24 |
| Silane adduct | 0.90 | 0.90 |
| Amino-functional silane (Silquest Y9669) | 0.33 | 0.33 |
| Toluene | - | 24.16 |
| ethyl acetate | - | 24.16 |
| Isopropyl alcohol | - | 5.37 |

This composition was draw-down coated on stainless steel coils. After the primer film was air dried at room temperature, a nitrile butadiene rubber coating was applied. After flashing off the solvents, a high temperature cure was conducted at 232.2 °C (450 °F) for 2 minutes.

The coated steel was then tested under different environments such as heat aging at 121.1 °C (250°F), ASTM #3 oil immersion at 148.9 °C (300°F) and coolant immersion at 100 °C (212°F) for a specified time, such as 500 hours. The performance of the coating and primer was then evaluated by Scotch tape peel after crosshatch. The results were that a 0% peel off of the coating was achieved.

### EXAMPLE 2

A primer composition according to the present invention was made by first preparing a silane adduct by reacting Silquest A1310, an isocyanato-functional silane, with Silquest Y9669, an amino-functional silane, as in Example 1. The reaction of the isocyanato-functional silane with the amino-functional silane was conducted at room temperature by slowly adding A1310 into Y9669 under agitation. No by-product was formed in this reaction.

After the silane adduct was formed, the remaining ingredients were combined with the silane adduct. The composition was as follows:

| **Materials** | **Dry Weight (g)** | **Wet Weight (in g based on a total of 100g)** |
|---|---|---|
| Carhon black (N762) | 0.41 | 0.41 |
| talc (Mistron ZSC) | 15.69 | 15.69 |
| ZnO | 1.03 | 1.03 |
| Phenoxy resin | 9.71 | 9.71 |
| Phenolic resin (GPRI 7590) | 10.94 | 18.24 |
| Silane adduct | 0.90 | 0.90 |
| Amino-functional silane (Silquest Y9669) | 0.33 | 0.33 |
| Toluene | - | 24.16 |
| ethyl acetate | - | 24.16 |
| Isopropyl alcohol | - | 5.37 |

This composition was draw-down coated on stainless steel coils. After the primer film was air dried at room temperature, a fluoroelastomer coating was applied. The coated steel was then tested under different environments such as heat aging at 200 °C (392°F), ASTM #3 oil immersion at 148.9 °C (300°F) and coolant immersion at 100 °C (212°F) for a specified time, such as 500 hours. The performance of the coating and primer was then evaluated by Scotch tape peel after crosshatch. The result was that a 0% peel off of the coating was achieved.

## Claims

1. An organic-functional silane adduct which is the reaction product of
(1) an isocyanatosilane and a non-isocyanate organofunctional silane which is reactive with isocyanate groups, or
(2) a non-isocyanate organofunctional silane and polyisocyanate,
wherein the adduct is **characterized by** the absence of free isocyanate groups.

2. The silane adduct of claim 1 wherein the organic-functional silane adduct is prepared by reacting at least one amino-, hydroxy-, or mercap-functional silane with at least one isocyanato-functional silane.

3. The silane adduct of claim 2 wherein the amino-functional silane is a phenyl substituted amino-functional silane.

4. The silane adduct of claim 2 wherein the isocyanato-functional silane is an isocyanatoalkylalkoxysilane wherein the alkyl and alkoxy groups have 1-5 carbon atoms.

5. The silane adduct of claim 2 wherein the relative proportion of aminofunctional silane to isocyanato-functional silane is between 1.0 : 0.2 and 1.0 : 1.0.

6. A primer composition comprising the silane adduct of any one of claims 1 to 5.

7. The composition according to claim 6 further comprising a phenolic resin.

8. The composition according to claim 6 further comprising a phenoxy resin.

9. The composition according to claim 8 wherein the phenoxy resin is crosslinked with the phenolic resin.

10. The composition according to claim 6 further comprising talc.

11. The composition of claim 10 wherein the talc is surface-treated.

12. The composition of claim 6 further comprising a phenolic resin, a phenoxy resin and surface-treated talc.

13. The primer composition of claim 7 wherein the phenolic resin is an alkylated thermosetting phenolic resin.

14. The composition of claim 6 further comprising an organic solvent.

15. A method of bonding an elastomer to a metal comprising coating the metal with a primer composition comprising a phenolic resin, a phenoxy resin, and the organic-functional silane adduct as defined in any one of claims 1 to 5, drying the primer composition coating, applying an elastomer coating to the primer composition, and curing the elastomer coating with heat.

16. The method of claim 15 wherein the organic-functional silane adduct is prepared by reacting at least one amino-, hydroxy-, or mercapto-functional silane with at least one isocyanato-functional silane or polyisocyanate wherein a molar excess of amino-, hydroxy-, or mercapto-functional silane is used, in relation to molar equivalents of isocyanate groups.

17. The method of claim 15 wherein the primer composition further comprises surface-treated talc.

18. The method of claim 15 wherein the metal is steel or stainless steel.

19. The method of claim 15 wherein the elastomer is nitrile butadiene rubber or a fluoroelastomer.

20. The method of claim 15, further comprising drying the elastomer coating prior to curing.

21. The method of claim 15 wherein the phenoxy resin is crosslinked by the phenolic resin during the curing step.

## Patentansprüche

1. Organisch-funktionelles Silan-Addukt, das das Reaktionsprodukt aus Folgendem ist:
(1) einem Isocyanato-Silan und einem organisch-funktionellen Nichtisocyanato-Silan, das mit Isocyanatgruppen reagiert, oder
(2) einem organisch-funktionellen Nichtisocyanato-Silan und einem Polyisocyanat,
wobei das Addukt durch das Fehlen von freien Isocyanatgruppen **gekennzeichnet** ist.

2. Silan-Addukt gemäß Anspruch 1, wobei das organisch-funktionelle Silan-Addukt hergestellt wird, indem man wenigstens ein amino-, hydroxy- oder mercapto-funktionelles Silan mit wenigstens einem isocyanato-funktionellen Silan umsetzt.

3. Silan-Addukt gemäß Anspruch 2, wobei das amino-funktionelle Silan ein phenyl-substituiertes, amino-funktionelles Silan ist.

4. Silan-Addukt gemäß Anspruch 2, wobei das isocyanato-funktionelle Silan ein Isocyanatoalkylalkoxysilan ist, in dem die Alkyl- und Alkoxygruppen 1 bis 5 Kohlenstoffatome haben.

5. Silan-Addukt gemäß Anspruch 2, wobei das relative Verhältnis des aminofunktionellen Silans zu dem isocyanato-funktionellen Silan zwischen 1,0:0,2 und 1,0:1,0 liegt.

6. Primer-Zusammensetzung, die das Silan-Addukt gemäß irgendeinem der Ansprüche 1 bis 5 umfasst.

7. Zusammensetzung gemäß Anspruch 6, die weiterhin ein phenolisches Harz umfasst.

8. Zusammensetzung gemäß Anspruch 6, die weiterhin ein Phenoxyharz umfasst.

9. Zusammensetzung gemäß Anspruch 8, wobei das Phenoxyharz durch ein phenolisches Harz vemetzt wird.

10. Zusammensetzung gemäß Anspruch 6, die weiterhin Talkum umfasst.

11. Zusammensetzung gemäß Anspruch 10, wobei das Talkum oberflächenbehandelt wird.

12. Zusammensetzung gemäß Anspruch 6, die weiterhin ein phenolisches Harz, ein Phenoxyharz und oberflächenbehandeltes Talkum umfasst.

13. Primer-Zusammensetzung gemäß Anspruch 7, wobei das phenolische Harz ein alkyliertes, wärmehärtbares phenolisches Harz ist.

14. Zusammensetzung gemäß Anspruch 6, die weiterhin ein organisches Lösungsmittel umfasst.

15. Verfahren zum Verkleben eines Elastomers mit einem Metall, umfassend das Beschichten des Metalls mit einer Primer-Zusammensetzung, umfassend ein phenolisches Harz, ein Phenoxyharz und das organisch-funktionelle Silan-Addukt gemäß irgendeinem der Ansprüche 1 bis 5, das Trocknen der Primerzusammensetzungs-Beschichtung, das Auftragen einer Elastomer-Beschichtung auf die Primer-Zusammensetzung und das Härten der Elastomer-Beschichtung mit Wärme.

16. Verfahren gemäß Anspruch 15, wobei das organisch-funktionelle Silan-Addukt hergestellt wird, indem man wenigstens ein amino-, hydroxy- oder mercapto-funktionelles Silan mit wenigstens einem isocyanato-funktionellen Silan oder Polyisocyanat umsetzt, wobei ein molarer Überschuss an amino-, hydroxy- oder mercapto-funktionellem Silan in Bezug auf die molaren Äquivalente an Isocyanatgruppen verwendet wird.

17. Verfahren gemäß Anspruch 15, wobei die Primer-Zusammensetzung weiterhin oberflächenbehandeltes Talkum umfasst.

18. Verfahren gemäß Anspruch 15, wobei das Metall Stahl oder Edelstahl ist.

19. Verfahren gemäß Anspruch 15, wobei das Elastomer Nitril-Butadien-Kautschuk oder ein Fluor-Elastomer ist.

20. Verfahren gemäß Anspruch 15, das weiterhin das Trocknen der Elastomer-Beschichtung vor dem Härten umfasst.

21. Verfahren gemäß Anspruch 15, wobei das Phenoxyharz während des Härtungsschritts durch das phenolische Harz vernetzt wird.

## Revendications

1. Produit d'addition organique fonctionnel de silane qui est le produit de réaction de :
(a) un isocyanatosilane et un silane organofonctionnel non-isocyanate qui réagit avec les groupes isocyanates, ou
(b) un silane organofonctionnel non-isocyanate et polyisocyanate, dans lesquels le produit d'addition est **caractérisé par** l'absence de groupes isocyanates libres.

2. Produit d'addition de silane selon la revendication 1 dans lequel le produit d'addition organique fonctionnel de silane est préparé en faisant réagir au moins un silane amino-fonctionnel, hydroxy-fonctionnel ou mercapto-fonctionnel avec au moins un silane isocyanato-fonctionnel.

3. Produit d'addition de silane selon la revendication 2 dans lequel le silane amino-fonctionnel est un silane amino-fonctionnel substitué phényl.

4. Produit d'addition de silane selon la revendication 2 dans lequel le silane isocyanato-fonctionnel est un silane isocyanatoalkylalkoxy dans lequel les groupes alkyle et alkoxy possèdent 1 à 5 atomes de carbone.

5. Produit d'addition de silane selon la revendication 2 dans lequel la proportion relative de silane amino-fonctionnel par rapport au silane isocyanato-fonctionnel est compris entre 1,0 : 0,2 et 1,0 : 1,0.

6. Composition amorce comprenant le produit d'addition de silane selon l'une quelconque des revendications 1 à 5.

7. Composition selon la revendication 6 comprenant en outre une résine phénolique.

8. Composition selon la revendication 6 comprenant en outre une résine phenoxy.

9. Composition selon la revendication 8 dans laquelle la résine phenoxy est réticulée par une résine phénolique.

10. Composition selon la revendication 6 comprenant en outre du talc.

11. Composition selon la revendication 10 dans laquelle le talc est traité en surface.

12. Composition selon la revendication 6 comprenant en outre une résine phénolique, une résine phénoxy et du talc traité en surface.

13. Composition amorce selon la revendication 7 dans laquelle la résine phénolique est une résine phénolique thermodurcissable alkylée.

14. Composition selon la revendication 6 comprenant en outre un solvant organique.

15. Procédé de liaison d'un élastomère à un métal comprenant le revêtement du métal avec une composition amorce comprenant une résine phénolique, une résine phénoxy, et le produit d'addition organique fonctionnel de silane tel que défini dans l'une quelconque des revendications 1 à 5, le séchage du revêtement de la composition amorce, l'application d'un revêtement élastomère sur la composition amorce, et la cuisson du revêtement élastomère avec de la chaleur.

16. Procédé selon la revendication 15 dans lequel le produit d'addition organique fonctionnel de silane est préparé en faisant réagir au moins un silane amino-fonctionnel, hydroxy-fonctionnel, ou mercapto-fonctionnel avec au moins un silane isocyanato-fonctionnel ou polyisocyanate dans lequel un excès molaire de silane amino-fonctionnel, hydroxy-fonctionnel, ou mercapto-fonctionnel est utilisé, en relation avec les équivalents molaires des groupes isocyanates.

17. Procédé selon la revendication 15 dans lequel la composition amorce comprend en outre un talc traité en surface.

18. Procédé selon la revendication 15 dans lequel le métal est de l'acier ou de l'acier inoxydable.

19. Procédé selon la revendication 15 dans lequel l'élastomère est du caoutchouc nitrile butadiène ou un élastomère fluoré.

20. Procédé selon la revendication 15, comprenant en outre le séchage du revêtement élastomère avant la cuisson.

21. Procédé selon la revendication 15 dans lequel la résine phénoxy est réticulée par la résine phénolique lors de l'étape de cuisson.
